# EUROPEAN PATENT APPLICATION

(11) **EP 4 764 296 A1**
(43) Date of publication of application: **24.06.2026**
(21) Application number: 24859326.1
(22) Date of filing: 01.08.2024
(51) Int. Cl.: F17C 13/00, B65D 90/44

(54) **PURGING METHOD FOR TRIPLE-SHELL TANK**

(30) Priority: 25.08.2023 JP 2023136973
(71) Applicant: KAWASAKI JUKOGYO KABUSHIKI KAISHA, Kobe-shi, Hyogo 650-8670 (JP)
(72) Inventor: YAMAGUCHI, Takahiro, Kobe-shi, Hyogo 650-8670 (JP); SATO, Takahiro, Kobe-shi, Hyogo 650-8670 (JP)
(74) Representative: Arnold & Siedsma
(86) International application number: PCT/JP2024/027612
(87) International publication number: WO 2025/047284

(57) **Abstract**

The present disclosure is a purging method for a triple shell tank including an inner tank, an intermediate tank, an outer tank, an inner insulation layer between the inner tank and the intermediate tank, and an outer insulation layer between the intermediate tank and the outer tank, in which an inside of the inner tank and the inner insulation layer are in communication with each other through a communication pipe. The purging method replaces a gas existing in the inner tank and a gas existing in the inner insulation layer with a replacement gas by using a predetermined first purge passage, and replaces a gas existing in the outer insulation layer with the replacement gas by using a second purge passage different from the first purge passage.

## Description

### Technical Field

The present disclosure relates to a purging method for a triple shell tank including an inner tank, an intermediate tank, and an outer tank.

### Background Art

As a tank that stores a cryogenic liquefied gas such as liquefied natural gas or liquefied hydrogen, a multi shell tank such as a double shell tank including an inner tank and an outer tank or a triple shell tank including an intermediate tank between the inner tank and the outer tank is known.

At the time of initial use or maintenance of the multi shell tank, it may be necessary to purge the gas existing in the inside of the tank or an insulation layer between the tanks to replace the gas with a required gas. Patent Literature 1 discloses a purging method in which, in a double shell tank that stores liquefied natural gas, a purge gas is supplied into the tank from an extraction pipe of BOG (boil off gas), and the gas after purge is discharged from a discharge pipe of the liquefied natural gas.

In general, in the double shell tank, the inside of the inner tank and the insulation layer between the inner tank and the outer tank are subjected to purge processing at different timings. Normally, after completion of the purge processing of the inner tank, the purge processing of the insulation layer is executed. In a case where such a purging method is applied to a triple shell tank, it may take a lot of time for the purge processing.

That is, in the triple shell tank, it is necessary to purge the inner tank that stores the liquefied gas, the inner insulation layer between the inner tank and the intermediate tank, and the outer insulation layer between the intermediate tank and the outer tank. When a method of purging these purge targets in stages is adopted, the time for the purge processing becomes longer. In particular, in a case where high purge accuracy is required, the time for purging at each stage becomes longer, and the purge processing becomes significantly longer.

### Citation List

### Patent Literature

### Patent Literature 1: JP 2012-207710 A

### Summary of Invention

An object of the present disclosure is to provide a purging method for a triple shell tank capable of reducing time for purge processing.

A purging method for a triple shell tank according to an aspect of the present disclosure is a purging method for a triple shell tank including an inner tank, an intermediate tank, an outer tank, an inner insulation layer between the inner tank and the intermediate tank, and an outer insulation layer between the intermediate tank and the outer tank, in which an inside of the inner tank and the inner insulation layer are in communication with each other through a communication pipe, the purging method including replacing a gas existing in the inner tank and a gas existing in the inner insulation layer with a replacement gas by using a predetermined first purge passage, and replacing a gas existing in the outer insulation layer with a replacement gas by using a second purge passage different from the first purge passage.

### Effects of Invention

The present disclosure can provide a purging method for a triple shell tank capable of reducing the time for the purge processing.

### Brief Description of Drawings

[FIG. 1] FIG. 1 is a sectional view schematically illustrating an example of a triple shell tank to which a purging method of the present disclosure is applied.
[FIG. 2] FIG. 2 is a diagram schematically illustrating a structure of a purge ring.
[FIG. 3] FIG. 3 is a step chart illustrating an example of a purging method for a triple shell tank according to an embodiment of the present disclosure.
[FIG. 4] FIG. 4 is a diagram illustrating an open/close state of a valve and a purge status in step 1 of the purging method according to the present embodiment.
[FIG. 5] FIG. 5 is a diagram illustrating an open/close state of the valve and a purge status in step 2.
[FIG. 6] FIG. 6 is a diagram illustrating an open/close state of the valve and a purge status in step 3.
[FIG. 7] FIG. 7 is a diagram illustrating an open/close state of the valve and a purge status in step 4.
[FIG. 8] FIG. 8 is a schematic view illustrating purge processing for an inner bottom insulation layer.

### Description of Embodiments

Hereinafter, an embodiment of a purging method for a triple shell tank of the present disclosure will be described in detail with reference to the drawings. The triple shell tank to be subjected to the purging method of the present disclosure is a ground based stationary tank that stores a low temperature liquefied gas. Examples of the low temperature liquefied gas to be stored include liquefied hydrogen, liquid helium, liquid nitrogen, liquefied natural gas, and liquefied petroleum gas. The following embodiment exemplifies, as an example, a purging method for a ground based stationary triple shell tank having a cylindrical shape with a flat bottom in which a fluid contained in the tank is liquefied hydrogen. Of course, the purging method of the present disclosure is also applicable to a triple shell tank having a shape other than a cylindrical shape with a flat bottom.

### [Description of Structure of Triple Shell Tank]

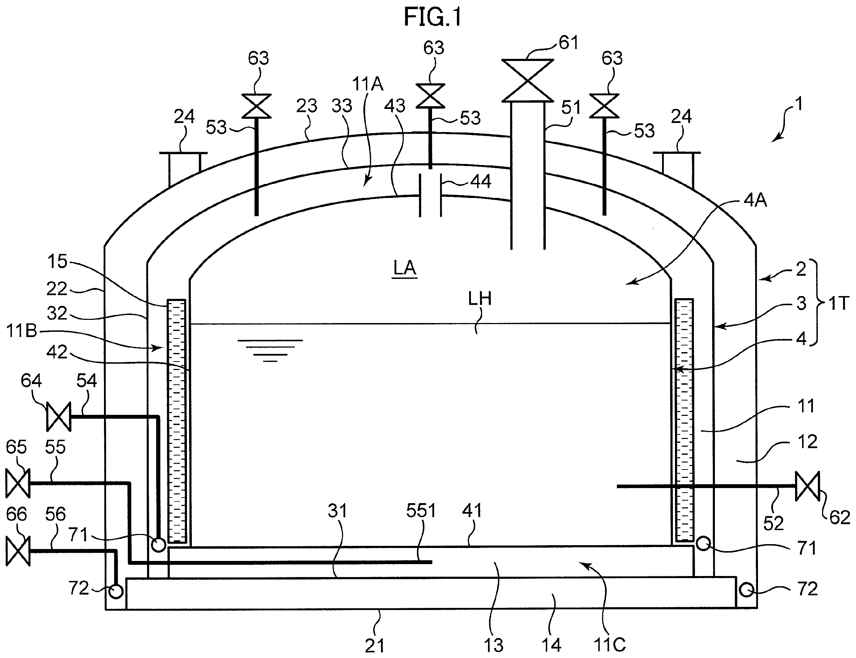

First, a structure example of a triple shell tank to which the purging method of the present embodiment is applied will be described. FIG. 1 is a sectional view schematically illustrating a triple shell tank 1 according to an embodiment. The triple shell tank 1 includes a tank body 1T that stores liquefied hydrogen LH, the tank body including an outer tank 2, an intermediate tank 3, and an inner tank 4 erected on a tank base (not shown). The tank body 1T has a cylindrical shape with a flat bottom, and the outer tank 2, the intermediate tank 3, and the inner tank 4 all have a circular shape in top view and are arranged concentrically. The inner tank 4 is a tank including, inside, a storage space 4A that actually stores the liquefied hydrogen LH. The intermediate tank 3 surrounds the inner tank 4 via the inner insulation layer 11. The outer tank 2 surrounds the intermediate tank 3 via the outer insulation layer 12.

The outer tank 2 is a sealed body made of metal such as carbon steel, and includes an outer tank bottom plate 21, an outer tank side plate 22, and an outer tank roof 23. The outer tank bottom plate 21 is laid immediately above the tank base and has a disk shape. The outer tank side plate 22 is erected from a peripheral edge of the outer tank bottom plate 21 and has a cylindrical shape. The outer tank roof 23 is attached to an upper end of the outer tank side plate 22 so as to close an upper surface opening of the cylindrical outer tank side plate 22, and has a dome shape. On the outer tank roof 23, a manhole 24 is opened at an appropriate position for a worker to enter and exit the tank body 1T.

The intermediate tank 3 is a sealed body, and includes an intermediate tank bottom plate 31, an intermediate tank side plate 32, and an intermediate tank roof 33. The intermediate tank bottom plate 31 has a disk shape having a diameter smaller than a diameter of the outer tank bottom plate 21. The intermediate tank side plate 32 is erected from a peripheral edge of the intermediate tank bottom plate 31 and has a cylindrical shape. The intermediate tank roof 33 is attached to an upper end of the intermediate tank side plate 32 and has a dome shape.

The inner tank 4 is a sealed body made of low temperature steel such as austenitic stainless steel, nickel steel, or aluminum alloy, and includes an inner tank bottom plate 41, an inner tank side plate 42, and an inner tank roof 43. The inner tank bottom plate 41 has a disk shape having a diameter smaller than the diameter of the intermediate tank bottom plate 31. The inner tank side plate 42 is erected from a peripheral edge of the inner tank bottom plate 41 and has a cylindrical shape. The inner tank roof 43 is attached to an upper end of the inner tank side plate 42 and has a dome shape. The liquefied hydrogen LH is stored in the storage space 4A inside the inner tank 4. An upper layer of the inner tank 4 is a gas phase LA in which hydrogen gas vaporized from the liquefied hydrogen LH is accumulated.

Between the inner tank 4 and the intermediate tank 3 and between the intermediate tank 3 and the outer tank 2, a gap having a predetermined width used as a heat insulating space is formed. The gap between the inner tank 4 and the intermediate tank 3 is used as the inner insulation layer 11, and the gap between the intermediate tank 3 and the outer tank 2 is used as the outer insulation layer 12. The inner insulation layer 11 and the outer insulation layer 12 are filled with a powder heat insulating material for enhancing an insulation property. As the powder heat insulating material, for example, granular perlite can be used. A heat insulating material 15 such as glass wool is disposed in a region surrounding a side periphery of the stored liquefied hydrogen LH between the intermediate tank side plate 32 and the inner tank side plate 42. The heat insulating material 15 may also be disposed between the outer tank side plate 22 and the intermediate tank side plate 32.

On a bottom side of the tank body 1T, the inner insulation layer 11 has an inner bottom insulation layer 13, and the outer insulation layer 12 has an outer bottom insulation layer 14. The inner bottom insulation layer 13 is interposed between the intermediate tank bottom plate 31 and the inner tank bottom plate 41 for heat insulation of a lower surface of the inner tank bottom plate 41. The outer bottom insulation layer 14 is interposed between the outer tank bottom plate 21 and the intermediate tank bottom plate 31 for heat insulation of a lower surface of the intermediate tank bottom plate 31. The inner bottom insulation layer 13 and the outer bottom insulation layer 14 can be configured by a stacked body of a solid heat insulating material or the like. As the solid heat insulating material, for example, a foam glass block can be used. For example, a block of ALC (autoclaved lightweight concrete) may be laid on a stacked body of the foam glass block to constitute the inner bottom insulation layer 13. The outer bottom insulation layer 14 can also be configured by a similar solid heat insulating material.

The inner insulation layer 11 and the outer insulation layer 12 are filled with a predetermined seal gas. Hydrogen gas or helium gas is desirably used as the seal gas of the inner insulation layer 11. In the present embodiment, a communication pipe 44 that allows the storage space 4A of the inner tank 4 to communicate with a space of the inner insulation layer 11 is disposed so as to penetrate the inner tank roof 43. Therefore, the hydrogen gas in the gas phase LA of the liquefied hydrogen LH stored in the inner tank 4 can be used as the seal gas. By installing the communication pipe 44, a pressure of the inner insulation layer 11 and a gas phase pressure of the inner tank 4 can be set to be substantially the same. This configuration can suppress liquefaction or solidification of the seal gas of the inner insulation layer 11 due to cold of the liquefied hydrogen LH stored in the inner tank 4. The outer insulation layer 12 is filled with an inert gas having a boiling point higher than a boiling point of hydrogen gas, for example, nitrogen gas as the seal gas. By filling the outer insulation layer 12 with the seal gas, heat insulation performance is improved.

The tank body 1T includes a plurality of pipes drawn from the inside to the outside of the tank body 1T. FIG. 1 illustrates, as the plurality of pipes, a BOG pipe 51, a discharge pipe 52, three roof pipes 53, an inner insulation layer pipe 54, a bottom insulation layer pipe 55, and an outer insulation layer pipe 56. A first valve 61, a second valve 62, a third valve 63, a fourth valve 64, a fifth valve 65, and a sixth valve 66 that open and close the pipes 51 to 56 are attached to the pipes, respectively.

The BOG pipe 51 is a pipe for extracting BOG of the liquefied hydrogen LH generated in the storage space 4A of the inner tank 4 to the outside of the tank body 1T. A lower end of the BOG pipe 51 is opened in the gas phase LA. An upper end side of the BOG pipe 51 vertically penetrates the inner tank roof 43, the intermediate tank roof 33, and the outer tank roof 23 and is drawn out from a roof portion of the tank body 1T. The BOG extracted from the BOG pipe 51 is used for re-liquefying into liquefied hydrogen in a liquefying facility, sending a gas as hydrogen gas to a customer, sending a gas to an emission facility, and the like. In the purging method according to the present embodiment, the BOG pipe 51 is used as a pipe for supplying a replacement gas (purge gas) for purging the storage space 4A of the inner tank 4 and the inner insulation layer 11.

The discharge pipe 52 is a pipe for discharging the liquefied hydrogen LH from the tank body 1T. One end of the discharge pipe 52 is opened to near a lower end of the inner tank 4, and the other end is drawn to the outside of the tank body 1T. The discharge pipe 52 may be a pump barrel that is installed so as to vertically penetrate the tank body 1T and includes a discharge port. In the purging method according to the present embodiment, the discharge pipe 52 is used as a pipe for discharging a gas existing in the inner tank 4. As a gas exhaust pipe of the inner tank 4, instead of the discharge pipe 52, a drain pipe used for drainage or the like in a water filling test of the inner tank 4 or a spare nozzle may be used.

The roof pipe 53 is a pipe for exhausting gas existing in a roof portion 11A between the inner tank roof 43 and the intermediate tank roof 33 in the inner insulation layer 11 in purge processing. A lower end of the roof pipe 53 is opened to the roof portion 11A of the inner insulation layer 11. An upper end side of the roof pipe 53 vertically penetrates the intermediate tank roof 33 and the outer tank roof 23 and is drawn out from the roof portion of the tank body 1T.

The inner insulation layer pipe 54 is a pipe that allows a region near the inner bottom insulation layer 13 of a side portion 11B between the inner tank side plate 42 and the intermediate tank side plate 32 in the inner insulation layer 11 to communicate with the outside of the tank body 1T. One end of the inner insulation layer pipe 54 is connected to a first purge ring 71. The first purge ring 71 is disposed near a bottom of the side portion 11B of the inner insulation layer 11 so as to surround a periphery of the inner bottom insulation layer 13. The other end of the inner insulation layer pipe 54 is drawn to the outside of the tank body 1T. In the purging method according to the present embodiment, the inner insulation layer pipe 54 is used as a pipe for supplying the purge gas to the side portion 11B of the inner insulation layer 11 or as a pipe for exhausting the gas existing in the side portion 11B.

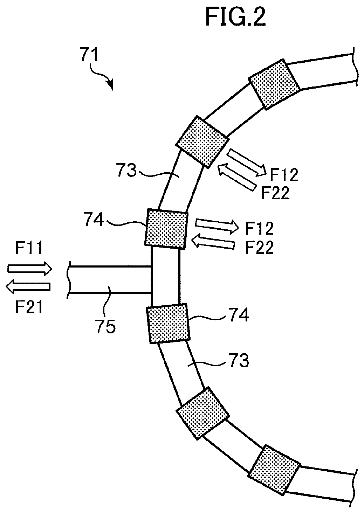

FIG. 2 is a diagram schematically illustrating a structure of the first purge ring 71. The first purge ring 71 is a structure in which a plurality of short pipes 73 is connected in an annular or arc shape by a coupling portion 74 having air permeability. One end of a proximal end pipe 75 is connected to one short pipe 73. The other end of the proximal end pipe 75 is connected to a supply source of the purge gas or a device for recovering or diffusing the purged gas and the gas after being purged including the purge gas. In a case where the first purge ring 71 is used in a supply system, when the purge gas is supplied to the proximal end pipe 75 as indicated by an arrow F11, the purge gas is discharged from the coupling portion 74 as indicated by an arrow F12. On the other hand, in a case where the first purge ring 71 is used in an exhaust system, when a negative pressure acts on the proximal end pipe 75 as indicated by an arrow F21, the gas after being purged is recovered from the coupling portion 74.

Returning to FIG. 1, the bottom insulation layer pipe 55 is a pipe that allows the bottom portion 11C between the inner tank bottom plate 41 and the intermediate tank bottom plate 31 in the inner insulation layer 11 to communicate with the outside of the tank body 1T. An exhaust opening 551 at one end of the bottom insulation layer pipe 55 is disposed near a radial center of the inner bottom insulation layer 13. The other end of the bottom insulation layer pipe 55 is drawn to the outside of the tank body 1T. In the purging method according to the present embodiment, the bottom insulation layer pipe 55 is used as a pipe for exhausting a gas existing in the bottom portion 11C.

The outer insulation layer pipe 56 is a pipe that allows a region near the outer bottom insulation layer 14 at a side bottom of the outer insulation layer 12 to communicate with the outside of the tank body 1T. One end of the outer insulation layer pipe 56 is connected to a second purge ring 72. The second purge ring 72 is disposed at the side bottom of the outer insulation layer 12 so as to surround a periphery of the outer bottom insulation layer 14. The other end of the outer insulation layer pipe 56 is drawn to the outside of the tank body 1T. In the purging method according to the present embodiment, the outer insulation layer pipe 56 is used as a pipe for supplying the purge gas to the side bottom of the outer insulation layer 12. The second purge ring 72 has a similar configuration to the first purge ring 71 illustrated in FIG. 2.

### [Outline of Purge Processing]

The purging method for the triple shell tank 1 according to the present embodiment replaces a gas existing in the inner tank 4 and a gas existing in the inner insulation layer 11 with a replacement gas (purge gas) by using a predetermined first purge passage, and replaces a gas existing in the outer insulation layer 12 with the replacement gas by using a second purge passage different from the first purge passage. In short, the purging of the inner tank 4 and the inner insulation layer 11 and the purging of the outer insulation layer 12 are simultaneously performed in parallel.

The first purge passage in the present embodiment is a passage for supplying the purge gas from the BOG pipe 51, and exhausting the gas after being purged from the discharge pipe 52 for the inner tank 4, and from the roof pipe 53, the inner insulation layer pipe 54, or the bottom insulation layer pipe 55 for the inner insulation layer 11. The second purge passage is a passage for supplying the purge gas from the outer insulation layer pipe 56 and exhausting the gas after being purged from the manhole 24 of the outer tank roof 23.

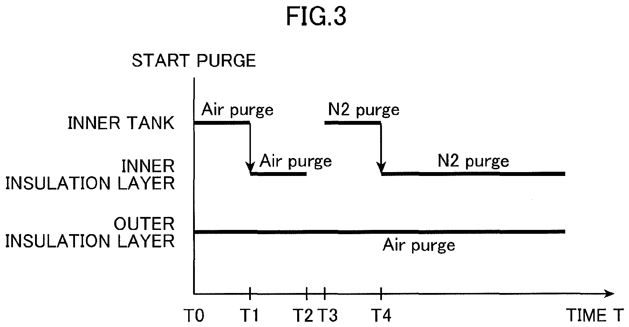

FIG. 3 is a step chart illustrating an example of the purging method according to the present embodiment. In FIG. 3, it is assumed that the inner tank 4, the inner insulation layer 11, and the outer insulation layer 12 are in an air environment exposed to air at time T0 of a time point when the purge begins. Purging of the outer insulation layer 12 is performed in which air is replaced with an inert gas, here, a nitrogen gas. During the purging of the outer insulation layer 12, the inner tank 4 and the inner insulation layer 11 are first subjected to a first stage purge of replacing the air existing in both spaces with nitrogen gas, and a second stage purge of replacing the nitrogen gas filled in both spaces by the first stage purge with hydrogen gas.

In FIG. 3, the purging for replacing air with nitrogen gas is referred to as "Air purge", and the purging for replacing nitrogen gas with hydrogen gas is referred to as "N2 purge". "Air purge" of the inner tank 4 is performed at time T0, and "Air purge" of the inner insulation layer 11 is performed at time T1. As will be described in detail later, the inner insulation layer 11 is purged with purge gas introduced from the inner tank 4 through the communication pipe 44. "Air purge" is also continuously performed on the outer insulation layer 12 from time T0. At time T3 after completion of "Air purge" of the inner tank 4 and the inner insulation layer 11, "N2 purge" of the inner insulation layer 11 is performed, and at subsequent time T4, "N2 purge" of the inner insulation layer 11 is performed. During this "N2 purge", "Air purge" of the outer insulation layer 12 is also performed.

In the purging method described above, since the purging of the inner tank 4 and the inner insulation layer 11 and the purging of the outer insulation layer 12 are performed in parallel, the time required for the purging processing of the triple shell tank 1 can be reduced. That is, while "Air purge" and "N2 purge" are performed on the inner tank 4 and the inner insulation layer 11 by using the first purge passage, "Air purge" of the outer insulation layer 12 is performed by using the second purge passage. In this manner, since two purge targets are simultaneously purged, time for purge processing can be reduced as compared with a case where each purge target is purged in stages. During "Air purge" of the outer insulation layer 12, the inner tank 4 and the inner insulation layer 11 are sequentially subjected to the two stages of "Air purge" and "N2 purge". In a case where the two stages of purging are required, the time for the purge processing inevitably becomes long, but the present embodiment can reduce the time for the purge processing of the triple shell tank 1 as a whole.

### [Specific Example of Purge Processing]

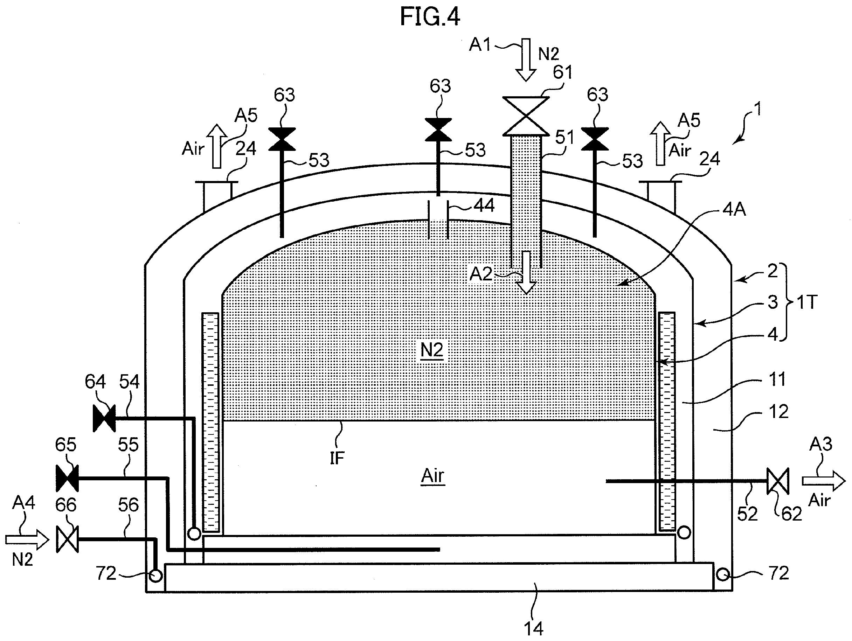

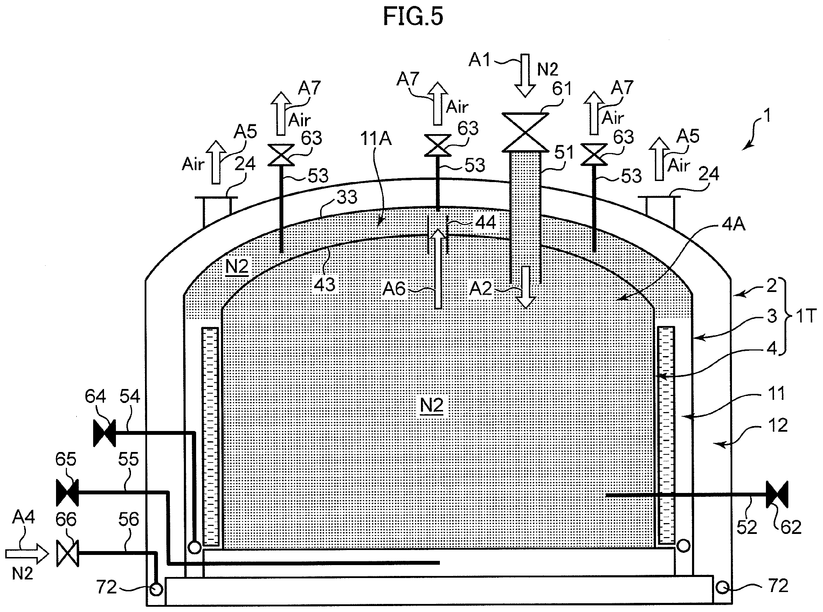

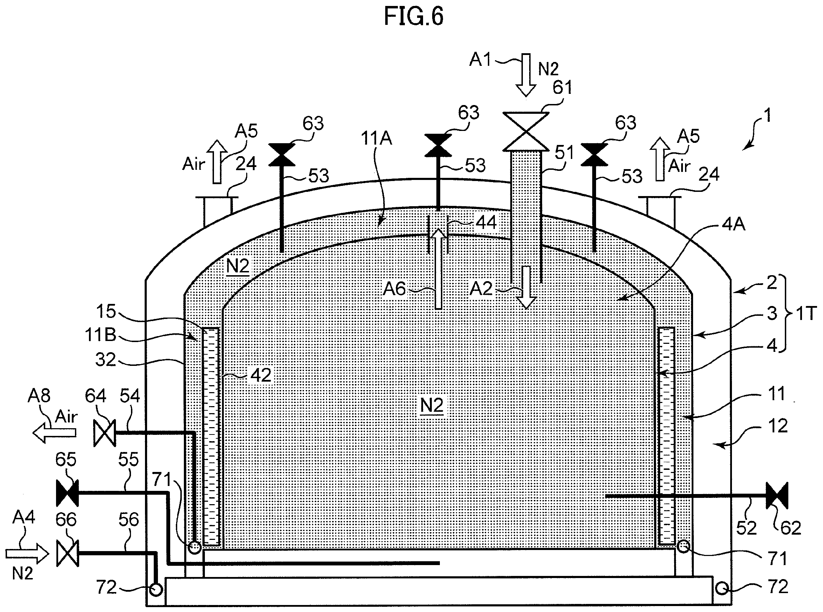

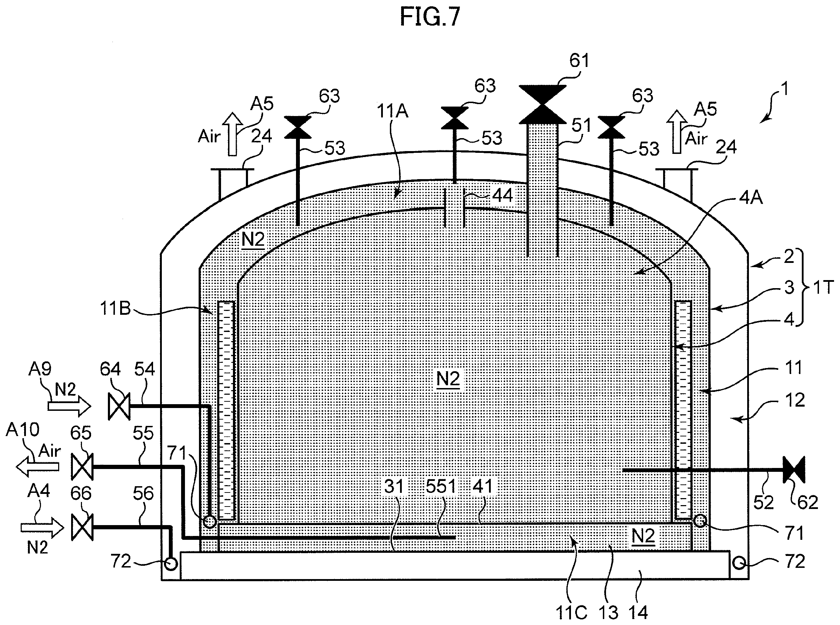

The purging method according to the present embodiment will be divided into the following steps 1 to 4, and sequentially described with reference to FIGS. 4 to 7. FIGS. 4 to 7 illustrate an example in which the purge processing from time T0 to time T2 in FIG. 3, that is, "Air purge" of the inner tank 4 and the inner insulation layer 11 and "Air purge" of the outer insulation layer 12 are performed in parallel. In FIGS. 4 to 7, "Air" represents air, and "N2" represents nitrogen gas. In the first valve 61 to the sixth valve 66 illustrated in FIGS. 4 to 7, the valves to be "closed" are illustrated in black, and the valves to be "opened" are illustrated in white.
· Step 1; a step in which the purging of the storage space 4A of the inner tank 4 and the purging of the outer insulation layer 12 are performed in parallel (FIG. 4).
· Step 2; a step in which the purging of the roof portion 11A of the inner insulation layer 11 and the purging of the outer insulation layer 12 are performed in parallel (FIG. 5).
· Step 3; a step in which the purging of the side portion 11B of the inner insulation layer 11 and the purging of the outer insulation layer 12 are performed in parallel (FIG. 6).
· Step 4; a step in which the purging of the bottom portion 11C of the inner insulation layer 11 and the purging of the outer insulation layer 12 are performed in parallel (FIG. 7).

### <Step 1>

FIG. 4 is a diagram illustrating an open/close state and a purge status of the first valve 61 to the sixth valve 66 in step 1. The valves to be "opened" in step 1 are the first valve 61 of the BOG pipe 51 and the second valve 62 of the discharge pipe 52 for purging the storage space 4A of the inner tank 4, and the sixth valve 66 of the outer insulation layer pipe 56 for purging the outer insulation layer 12. Note that a sealing lid of the manhole 24 is opened, and the space of the outer insulation layer 12 and outside air are in communication with each other through the manhole 24. On the other hand, the third valve 63, the fourth valve 64, and the fifth valve 65 of the roof pipe 53, the inner insulation layer pipe 54, and the bottom insulation layer pipe 55 communicating with the inner insulation layer 11 are "closed".

### As indicated by an arrow A1, nitrogen gas as purge gas is supplied to the BOG pipe 51.

As indicated by an arrow A2, the nitrogen gas is introduced into the storage space 4A of the inner tank 4. As an introduction passage for introducing the nitrogen gas into the inner tank 4, another pipe for allowing an upper layer of the storage space 4A to communicate with the outside air may be used instead of the BOG pipe 51. In the present embodiment, purging is performed by a piston flow method in which an interface IF is formed between two types of gases on the basis of a density difference between the two types of gases, and one of the gases is gradually pushed in and discharged. Specifically, nitrogen gas heated to about 60°C is introduced into the storage space 4A in order to make the density difference clear. Since air at room temperature exists in the storage space 4A before purging, the interface IF is formed between the nitrogen gas and the air due to a density difference between the nitrogen gas and the air.

Since the storage space 4A of the inner tank 4 and the inner insulation layer 11 communicate with each other through the communication pipe 44, it is necessary to narrow an outlet of the air to be purged to the discharge pipe 52 in executing the piston flow method. The reason why the third valve 63, the fourth valve 64, and the fifth valve 65 which allow the inner insulation layer 11 and the outside air to communicate with each other are closed is because of the above reason, and the interface IF is maintained by this valve operation. That is, air and nitrogen gas are not mixed in the storage space 4A. As the introduction of the nitrogen gas into the storage space 4A progresses, the interface IF gradually shifts to a lower part of the storage space 4A. As indicated by an arrow A3, the air is diffused from the discharge pipe 52 to the outside air while being pressed against a nitrogen gas layer.

As indicated by an arrow A4, nitrogen gas as purge gas is also supplied to the outer insulation layer pipe 56. The supplied nitrogen gas is introduced into the outer insulation layer 12 from the second purge ring 72. Air exists in the outer insulation layer 12 before purging. This air is released from the opened manhole 24 to the outside air as indicated by an arrow A5 by being pushed out by the flow of the supplied nitrogen gas. The purge operation for the outer insulation layer 12, which is the same in the subsequent steps 2 to 4, will not be described below.

### <Step 2>

FIG. 5 is a diagram illustrating an open/close state and a purge status of the first valve 61 to the sixth valve 66 in step 2. The valves to be "opened" in step 2 are the first valve 61 of the BOG pipe 51 and the third valve 63 of the roof pipe 53. For example, the oxygen concentration of the gas flowing through the discharge pipe 52 is measured during the execution of the previous step 1, and when the oxygen concentration becomes equal to or less than a predetermined control value, it is assumed that the atmosphere in the inner tank 4 is replaced from the air with the nitrogen gas, and the second valve 62 is closed while the third valve 63 is opened. With such a valve operation, the processing proceeds from step 1 to step 2.

The purge passage in step 2 is a passage that sequentially passes through the BOG pipe 51 (introduction passage), the inner tank 4, the communication pipe 44, the roof portion 11A of the inner insulation layer 11, and the roof pipe 53 (lead-out passage). At the time of transition to step 2, the storage space 4A of the inner tank 4 is replaced with nitrogen gas. The nitrogen gas is introduced from the inner tank 4 to the roof portion 11A of the inner insulation layer 11 through the communication pipe 44 as indicated by arrow A6. The inner insulation layer pipe 54 and the bottom insulation layer pipe 55, which are other pipes communicating with the inner insulation layer 11, are closed to efficiently replace the air of the roof portion 11A with the nitrogen gas. The air existing in the roof portion 11A is diffused from the roof pipe 53 to the outside air as indicated by arrow A7 by being pushed out by the introduced nitrogen gas.

In step 2, the purging is performed as follows. After the purging of the inner tank 4 is completed, a nitrogen gas as a purge gas is sent from the inner tank 4 to the roof portion 11A of the inner insulation layer 11 through the communication pipe 44, and air is exhausted from the roof portion 11A. The nitrogen gas introduction passage may be set at an appropriate position of the inner insulation layer 11. However, in this case, it is necessary to provide an on-off valve in the communication pipe 44. When an introduction pressure of the nitrogen gas is applied to the inner insulation layer 11, a pressure (negative pressure) in such a direction to contract the inner tank 4 is generated, and there is a concern that the inner tank 4 is buckled. On the other hand, in a case where the purge gas is sent from the inner tank 4 to the inner insulation layer 11, at least a positive pressure can be applied to the inner tank 4, and then, the above concern can be solved.

### <Step 3>

FIG. 6 is a diagram illustrating an open/close state and a purge status of the first valve 61 to the sixth valve 66 in step 3. The valves to be "opened" in step 3 are the first valve 61 of the BOG pipe 51 and the fourth valve 64 of the inner insulation layer pipe 54. In step 3, as indicated by the arrows A2 and A6, the introduction passage of the nitrogen gas as the purge gas is a passage introduced from the inner tank 4 to the roof portion 11A of the inner insulation layer 11 through the communication pipe 44.

Since the roof pipe 53 communicating with the roof portion 11A is closed, the flow of the nitrogen gas is directed to a lower part of the side portion 11B of the inner insulation layer 11, that is, the first purge ring 71 serving as an inlet of the opened inner insulation layer pipe 54. By the flow of the nitrogen gas, the air existing in the side portion 11B is diffused to the outside air through the inner insulation layer pipe 54 as indicated by an arrow A8. Since the first purge ring 71 is disposed so as to circulate around the bottom of the side portion 11B, the air remaining in the annular side portion 11B can be uniformly recovered, and the recovered air can be diffused from the inner insulation layer pipe 54.

### <Step 4>

FIG. 7 is a diagram illustrating an open/close state and a purge status of the first valve 61 to the sixth valve 66 in step 4. The valves to be "opened" in step 4 are the fourth valve 64 of the inner insulation layer pipe 54 and the fifth valve 65 of the bottom insulation layer pipe 55. In step 4, the introduction passage of the nitrogen gas as the purge gas is changed from the BOG pipe 51 to the inner insulation layer pipe 54. Most of the inner bottom insulation layer 13 is occupied by a solid block or the like, and the amount of air to be replaced is small. Since the amount of nitrogen gas to be supplied is also small, the negative pressure load on the inner tank 4 is small, and purging can be performed without adopting a nitrogen gas introduction passage through the inner tank 4.

As indicated by an arrow A9, the nitrogen gas is supplied to the inner insulation layer pipe 54, and introduced into a periphery of the bottom portion 11C of the inner insulation layer 11 through the first purge ring 71. That is, the first purge ring 71 that has served to recover the air to be replaced in step 3 serves to supply the purge gas in step 4. The introduced nitrogen gas enters the inner bottom insulation layer 13. The air remaining in the inner bottom insulation layer 13 is recovered from the exhaust opening 551 of the bottom insulation layer pipe 55 and diffused to the outside air through the bottom insulation layer pipe 55 as indicated by an arrow A10.

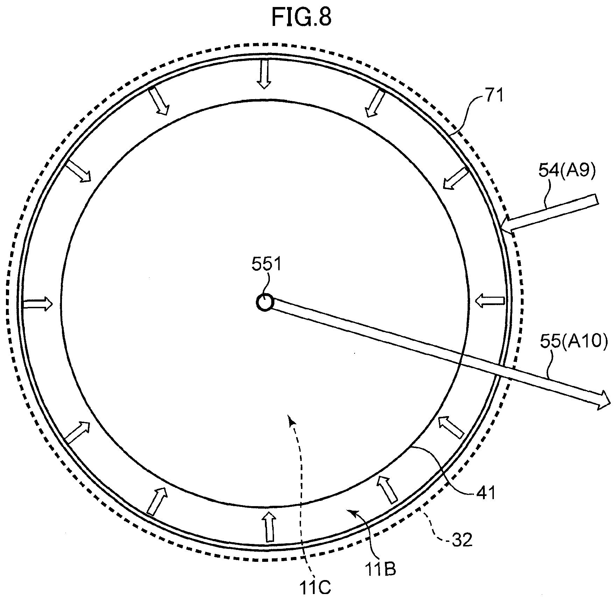

FIG. 8 is a top view of a tank bottom showing the purge processing for the inner bottom insulation layer 13 in step 4. The nitrogen gas is introduced from the first purge ring 71 disposed so as to surround the inner bottom insulation layer 13 on a radially outer side of the inner tank bottom plate 41. As indicated by the arrow A9 in FIG. 8, when nitrogen gas is supplied to the inner insulation layer pipe 54, the nitrogen gas is supplied from the coupling portion 74 (FIG. 2) of the first purge ring 71 toward near a peripheral edge of the inner tank bottom plate 41.

Thereafter, the nitrogen gas enters a radial center of the inner tank bottom plate 41 while pushing out the air existing in a gap between the blocks of the inner bottom insulation layer 13 or the like. The exhaust opening 551 of the bottom insulation layer pipe 55 is disposed near a radial center of the inner tank bottom plate 41. The air pushed by the nitrogen gas is taken into the bottom insulation layer pipe 55 from the exhaust opening 551 and is exhausted as indicated by an arrow A10. In this manner, since the air to be purged is pushed inward from the radially outer side of the inner tank bottom plate 41 and taken out from the exhaust opening 551 near the radial center, the purge processing can be performed more efficiently.

### <N2 Purge>

The N2 purge for replacing the nitrogen gas with the hydrogen gas after replacing the inner tank 4 and the inner insulation layer 11 with the nitrogen gas can also be similarly executed by the procedure of steps 1 to 4 described above. However, heating of the hydrogen gas introduced into the inner tank 4 as the purge gas during the piston flow in step 1 is unnecessary because the density difference between the hydrogen gas and the nitrogen gas is sufficiently large.

### [Modifications]

Although the embodiments of the present disclosure have been described above, the present disclosure is not limited to these embodiments. For example, the following modified embodiments can be adopted.
(1) In step 1 described above, an example has been shown in which the purge gas is introduced from the BOG pipe 51 into the inner tank 4 and purged by the piston flow method. A method of performing purging with the gas flow of the purge gas may be adopted without adopting the piston flow method. **In** this case, a purge passage for introducing a purge gas from the discharge pipe 52 or the like into the inner tank 4 and exhausting the purge gas from the BOG pipe 51 or the like may be adopted.
(2) **In** step 4, the purge gas is introduced from the inner insulation layer pipe 54 and the first purge ring 71 into the inner insulation layer 11. Alternatively, in step 4, similarly to steps 2 and 3, the purge gas may be introduced into the bottom portion 11C of the inner insulation layer 11 through the BOG pipe 51 and the communication pipe 44.
(3) **In** the purging of the inner insulation layer 11 in steps 2 to 4, a purge passage for introducing a purge gas from the inner insulation layer pipe 54 and exhausting the purge gas from the roof pipe 53 or exhausting the purge gas from both the roof pipe 53 and the bottom insulation layer pipe 55 may be adopted. **In** this case, it is desirable to adopt a configuration in which a part of the communication pipe 44 is a pipe exposed to the outside of the tank body 1T, and an on-off valve is provided in the exposed part. After completion of the purging of the inner tank 4, when the purging of the inner insulation layer 11 is performed, the communication pipe 44 is closed by the on-off valve to cut off the storage space 4A and the inner insulation layer 11, and then the purge gas is introduced from the inner insulation layer pipe 54.

### [Summary of Present Disclosure]

The specific embodiments described above include a disclosure having the following configurations.

A purging method for a triple shell tank according to a first aspect of the present disclosure is a purging method for a triple shell tank including an inner tank, an intermediate tank, an outer tank, an inner insulation layer between the inner tank and the intermediate tank, and an outer insulation layer between the intermediate tank and the outer tank, in which an inside of the inner tank and the inner insulation layer are in communication with each other through a communication pipe, the purging method including replacing a gas existing in the inner tank and a gas existing in the inner insulation layer with a replacement gas by using a predetermined first purge passage, and replacing a gas existing in the outer insulation layer with a replacement gas by using a second purge passage different from the first purge passage.

In the purging method described above, since the purging of the inner tank and the inner insulation layer and the purging of the outer insulation layer are performed in parallel, the time required for the purging processing of the triple shell tank can be reduced. That is, while purging of replacing the inner tank and the inner insulation layer with a required replacement gas by using the first purge passage is performed, purging of replacing the outer insulation layer with a required replacement gas by using the second purge passage can be performed. In this manner, since two purge targets are simultaneously purged, time for purge processing can be reduced as compared with a case where each purge target is purged in stages.

A purging method for the triple shell tank according to a second aspect further includes, in the purging method according to the first aspect, executing, while replacing the gas in the outer insulation layer with the replacement gas, a first stage purge of replacing the gas in the inner tank and the gas in the inner insulation layer with an inert gas and a second stage purge of replacing the inert gas in the inner tank and the inner insulation layer with a storage gas stored in the inner tank.

In the second aspect, the first stage purge and the second stage purge are sequentially performed on the inner tank and the inner insulation layer during the purging of the outer insulation layer. In a case where the two stages of purging are required, the time for the purge processing inevitably becomes long, but the second aspect can reduce the time for the purge processing of the triple shell tank as a whole.

In a purging method for the triple shell tank according to a third aspect, in the purging method for the triple shell tank according to the first or second aspect, the first purge passage includes an introduction passage that introduces the replacement gas into the inner tank and a lead-out passage that leads out the replacement gas from the inner insulation layer to outside, the method further including after replacing the gas in the inner tank with the replacement gas, introducing the replacement gas from the inner tank to the inner insulation layer through the communication pipe.

In the third aspect, the purging using the first purge passage is performed as follows. After completion of the purging of the inner tank, the replacement gas is sent from the inner tank to the inner insulation layer through the communication pipe, and the replacement gas is exhausted from the inner insulation layer. In a case where a passage that directly sends the replacement gas to the inner insulation layer is adopted, there is a concern that a pressure (negative pressure) in such a direction as to contract the inner tank is generated and the inner tank is buckled. On the other hand, in a case where the replacement gas is sent from the inner tank to the inner insulation layer, at least a positive pressure can be applied to the inner tank, and then, the above concern can be solved.

In a purging method for the triple shell tank according to a fourth aspect, in the purging method according to the third aspect, the inner tank includes an inner tank roof and an inner tank side plate, the intermediate tank includes an intermediate tank roof and an intermediate tank side plate, and the communication pipe is disposed so as to penetrate the inner tank roof, and purging of the inner insulation layer is executed by a procedure of replacing a gas in a roof portion between the inner tank roof and the intermediate tank roof with the replacement gas, and then replacing a gas in a side portion between the inner tank side plate and the intermediate tank side plate with the replacement gas.

In the fourth aspect, in the inner insulation layer, first, the roof portion close to an arrangement position of the communication pipe is purged, and then the side portion is purged. Therefore, the purge processing according to the tank structure including the communication pipe can be performed for the inner insulation layer.

In a purging method for the triple shell tank according to a fifth aspect, in the purging method according to the fourth aspect, the inner tank includes an inner tank bottom plate having a flat-bottom shape, and the intermediate tank includes an intermediate tank bottom plate having a flat-bottom shape, the purging of the inner insulation layer further includes a procedure of replacing a gas in a bottom portion between the inner tank bottom plate and the intermediate tank bottom plate with the replacement gas subsequently after purging of the side portion.

In the fifth aspect, the purge processing can also be performed on the bottom portion of the inner insulation layer subsequently after the purging of the side portion of the inner insulation layer. Therefore, the inner insulation layer can be purged without omission.

In a purging method for the triple shell tank according to sixth aspect, in the purging method according to the fifth aspect, purging of the bottom portion of the inner insulation layer is executed by using a purge passage that leads out the replacement gas from near the center of the inner tank bottom plate.

In the sixth aspect, since the replacement gas is directly introduced into the bottom portion of the inner insulation layer and the replacement gas is led out from the bottom portion, the efficiency of the purge processing can be enhanced. The replacement gas may be introduced from near a peripheral edge of the inner tank bottom plate, and the replacement gas may be led out from near the center of the inner tank bottom plate. In this case, since the gas to be purged in the bottom portion is pushed inward from the radially outer side of the inner tank bottom plate and taken out from near the radial center, the purge processing can be performed more efficiently.

### Description for reference signs

- 1: triple shell tank

- 11: inner insulation layer
- 11A, 11B, 11C: roof portion, side portion, bottom portion
- 12: outer insulation layer
- 2: outer tank
- 21, 22, 23: outer tank bottom plate, outer tank side plate, outer tank roof
- 24: manhole (second purge passage)
- 3: intermediate tank
- 31, 32, 33: intermediate tank bottom plate, intermediate tank side plate, and intermediate tank roof
- 4: inner tank
- 4A: storage space (inside of inner tank)
- 41, 42, 43: inner tank bottom plate, inner tank side plate, inner tank roof
- 44: communication pipe
- 51: BOG pipe (introduction passage/first purge passage)
- 52: discharge pipe (lead-out passage/first purge passage)
- 53: roof pipe (lead-out passage/first purge passage)
- 54: inner insulation layer pipe (lead-out passage and introduction passage/first purge passage)
- 55: bottom insulation layer pipe (lead-out passage/first purge passage)
- 56: outer insulation layer pipe (second purge passage)

## Claims

1. A purging method for a triple shell tank including an inner tank, an intermediate tank, an outer tank, an inner insulation layer between the inner tank and the intermediate tank, and an outer insulation layer between the intermediate tank and the outer tank, wherein an inside of the inner tank and the inner insulation layer are in communication with each other through a communication pipe, the purging method comprising:
replacing a gas existing in the inner tank and a gas existing in the inner insulation layer with a replacement gas by using a predetermined first purge passage; and
replacing a gas existing in the outer insulation layer with a replacement gas by using a second purge passage different from the first purge passage.

2. The purging method for the triple shell tank according to claim 1, further comprising executing
while replacing the gas in the outer insulation layer with the replacement gas, a first stage purge of replacing the gas in the inner tank and the gas in the inner insulation layer with an inert gas and a second stage purge of replacing the inert gas in the inner tank and the inner insulation layer with a storage gas stored in the inner tank.

3. The purging method for the triple shell tank according to claim 1 or 2, wherein
the first purge passage includes an introduction passage that introduces the replacement gas into the inner tank and a lead-out passage that leads out the replacement gas from the inner insulation layer to outside, the method further comprising
after replacing the gas in the inner tank with the replacement gas, introducing the replacement gas from the inner tank to the inner insulation layer through the communication pipe.

4. The purging method for the triple shell tank according to claim 3, wherein
the inner tank includes an inner tank roof and an inner tank side plate, the intermediate tank includes an intermediate tank roof and an intermediate tank side plate, and the communication pipe is disposed so as to penetrate the inner tank roof, and
purging of the inner insulation layer is executed by a procedure of replacing a gas in a roof portion between the inner tank roof and the intermediate tank roof with the replacement gas, and then replacing a gas in a side portion between the inner tank side plate and the intermediate tank side plate with the replacement gas.

5. The purging method for the triple shell tank according to claim 4, wherein
the inner tank includes an inner tank bottom plate having a flat-bottom shape, and the intermediate tank includes an intermediate tank bottom plate having a flat-bottom shape,
the purging of the inner insulation layer further includes a procedure of replacing a gas in a bottom portion between the inner tank bottom plate and the intermediate tank bottom plate with the replacement gas subsequently after purging of the side portion.

6. The purging method for the triple shell tank according to claim 5, wherein purging of the bottom portion of the inner insulation layer is executed by using a purge passage that leads out the replacement gas from near a center of the inner tank bottom plate.
